# EUROPEAN PATENT APPLICATION

(11) **EP 1 433 953 A2**
(43) Date of publication of application: **30.06.2004**
(21) Application number: 03023493.4
(22) Date of filing: 18.10.2003
(51) Int. Cl.: F02N 5/00, F02N 7/06, F01C 21/16

(54) **Reversible pneumatic group with two stages**

(30) Priority: 23.12.2002 IT vi20020279
(71) Applicant: Dolcetta Capuzzo, Cesare, Dott. Ing., 36100 Vicenza (IT)
(72) Inventor: Dolcetta Capuzzo, Cesare, Dott. Ing., 36100 Vicenza (IT)
(74) Representative: Bettello, Pietro, Dott. Ing.

(57) **Abstract**

The finding concerns a reversible pneumatic group with two stages, to be used in any fixed or mobile application, where one wishes to accumulate and restore mechanical energy without the need for thermal motors or electrical motors/accumulators, in particular for the movement of light vehicles without a thermal or electric motor (bicycles, velocipedes, toys, special vehicles, etc...), as well as as a compressed air starter in vehicles with an internal combustion engine to replace the lead starter battery and the electric starter motor. Such a reversible pneumatic group is characterised in that it can act both as a compressor and as a compressed air motor.

## Description

The present finding concerns a reversible pneumatic group with two stages suitable for acting both as a compressor and a compressed air motor.

The purpose of the present finding is that of foreseeing a pneumatic group to be used in any fixed or mobile application where one wishes to accumulate and restore mechanical energy without the need for thermal motors or electrical motors/accumulators, in particular for the movement of light vehicles without a thermal or electric motor (bicycles, velocipedes, toys, special vehicles, etc...).

Moreover, the present finding constitutes an innovative variant of the pneumatic group described in patent application no. VI2001A000110 of 11.05.2001, filed by the same Applicant, concerning a "Starter system for an internal combustion engine through compressed air", to which we refer for the illustration of the general aspects and the state of the art in the specific field of combustion engines.

The novelty characteristic of the present finding consists of the fact that such a pneumatic group, when it works in the state of compression, operates as a "two stage compressor", where the first stage uses a compression system with an eccentric bladed rotor, according to *per se* known ways, whereas the second stage uses a compression system with small concentric pistons which are elastically connected to the blades and floating in corresponding compression/expansion chambers, formed on the body of the rotor.

With such a constructive solution, when the blades rotate to realise the first compression stage, they slide radially towards the centre of the motor and thrust the small pistons connected to them towards the centre of the rotor, which decreases the volume of the individual chambers and thus realises a compressing force which increases the pressure value of the compressed air in the chamber, or rather a second compression stage is also realised simultaneously.

Just as an example we describe some possible operating values: in the first compression stage (radial blades mounted on an eccentric motor) a first compression of the air flow is generated from atmospheric pressure up to about 5 bar; such a compressed airflow is then introduced into the second stage, where it undergoes a further compression up to about 50 bar.

Vice-versa, when the pneumatic group acts as a motor, the blades slide radially in the opposite direction with respect to the direction of rotation as a compressor, regulated in stroke by their contact against the wall of the stator and kept in position by suitable elastic elements (springs); said blades, rotating, radially pull and thrust the small pistons in an integral manner, which, in this operating state as a motor, can slide freely given that the chamber is kept open by an air vent.

Practically, the functional difference of the group according to the finding with respect to normal bladed rotating volumetric compressors, as well as with respect to known compressed air motors, lies in its reversibility, or rather in the possibility that such a single apparatus can act in two different ways: as a compressor, to transfer mechanical energy into compressed air and as a motor, to restore the energy of the compressed air into mechanical energy, all of this being able to be obtained by simply inverting the direction of rotation of the rotor.

A second functional difference of the group according to the finding with respect to normal bladed rotating volumetric compressors is the possibility of obtaining air pressures of a greater order of magnitude, using, incorporated in the same stator, a second stage with small concentric pistons.

In greater detail, the operation of the pneumatic group according to the finding is regulated by a non-return valve inside the body of the rotor, which regulate the flow of compressed air, and by an air vent which ensures the change in state from compressor to motor, freeing the inner chambers of the small pistons to allow them to slide freely, when it acts in rotating bladed motor state.

The constant and perfect adherence of the blades to the wall of the stator is ensured, above all with the group switched off, by preloaded elastic elements (springs) placed between the blades and the rotor.

In particular, for mobile applications, but also fixed ones if so desired, the reversible pneumatic group according to the finding is connected to a suitable compressed air collection tank, of an appropriate shape for the specific applications and then becomes, with the tank, a reversible pneumatic accumulator.

In applications with a tank the reversible pneumatic group according to the finding acts with a closed circuit, as a compressor which produces a flow of compressed air and as a motor actuated by the same flow of compressed air.

An advantageous mobile application of the group according to the finding consists of use as a compressed air starter for thermal motors; it acts as a compressor during the movement of the vehicle, compressing atmospheric air in a tank to about 50 bar to then use it, after a suitable reduction in pressure, to act as a compressed air starter of the motor itself.

A vehicle can thus be realised equipped with a compressor/compressed air starter and a tank, formed, for example, in the volume of the bumpers, which replaces the lead starter battery and electric starter motors.

A further advantageous application of the reversible group according to the finding is on a bicycle as a reversible motor, which acts as a compressed air accumulator when one pedals downhill, whereas it becomes a compressed air motor which helps pedalling uphill, or else allows higher speeds to be reached on the flat.

The characteristics of the finding are better highlighted through the description of a possible embodiment thereof, given just as a non-limiting example, with the help of the attached tables of drawings, where:

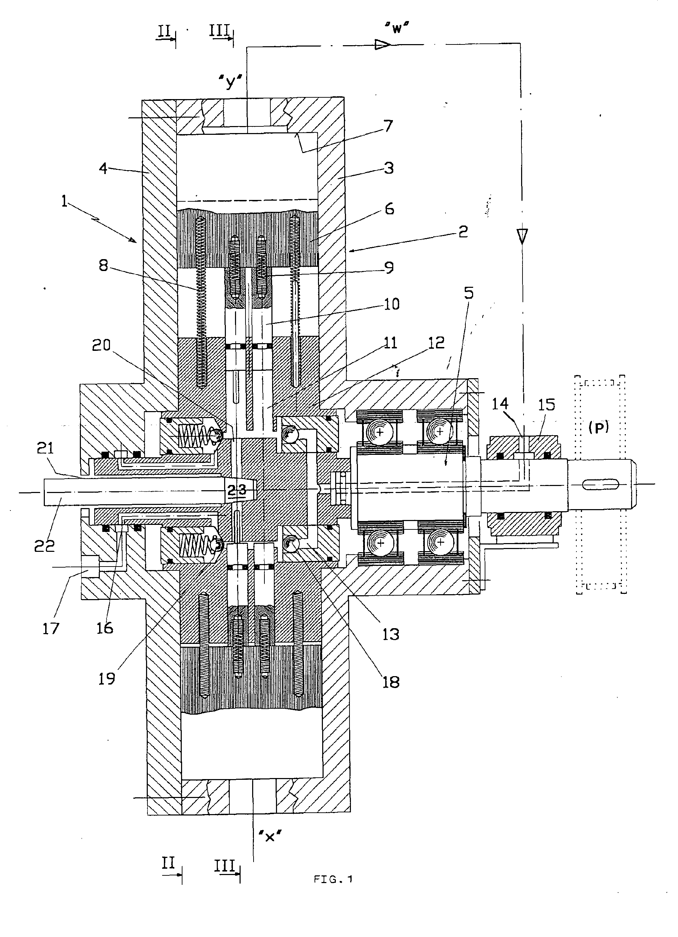

- fig. 1 (Table I) represents an elevated front section view of the group according to the finding;

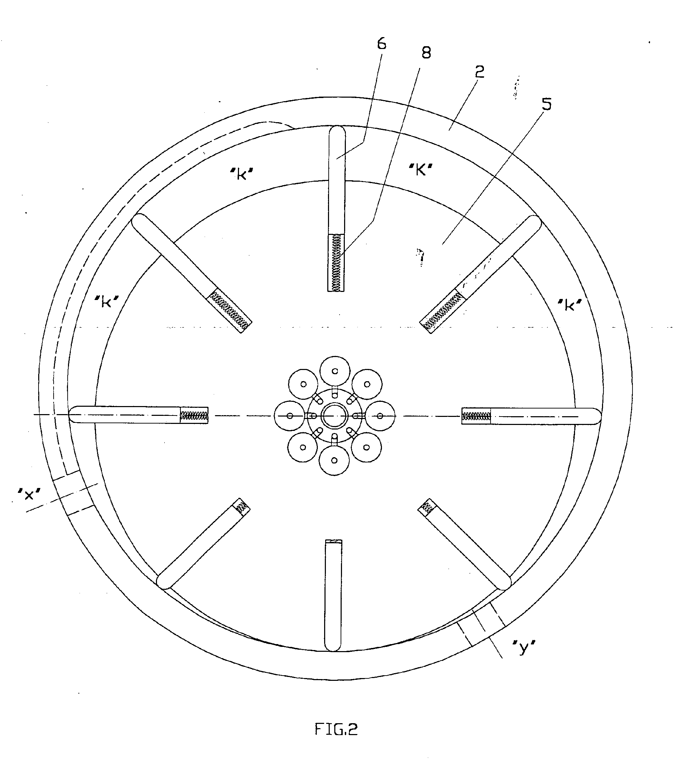

- fig. 2 (Table II) represents an elevated transversal view, sectioned according to the line II-II of fig. 1;

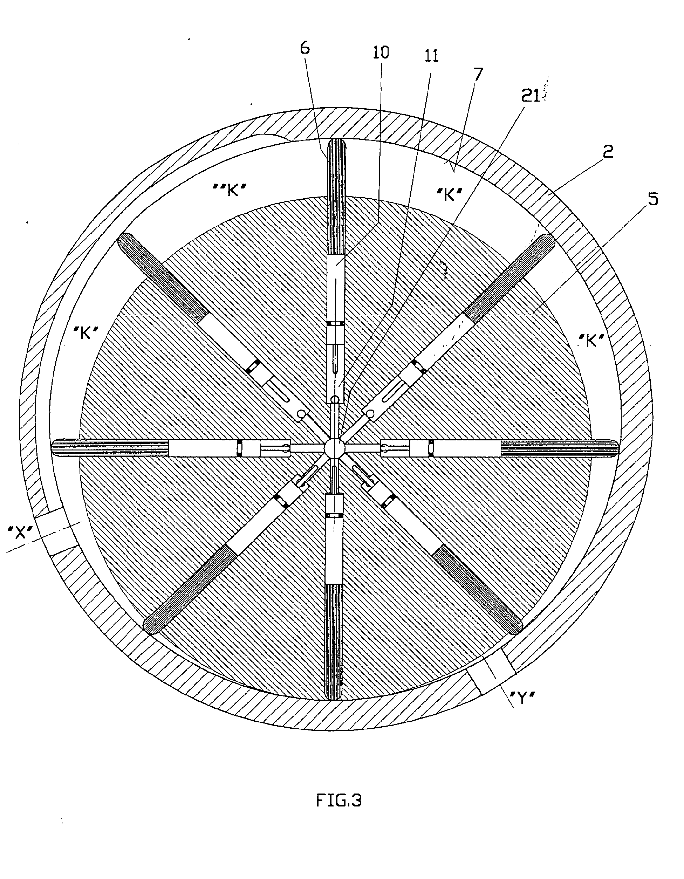

- fig. 3 (Table III) represents an elevated transversal view, sectioned according to the line III-III of fig. 1;

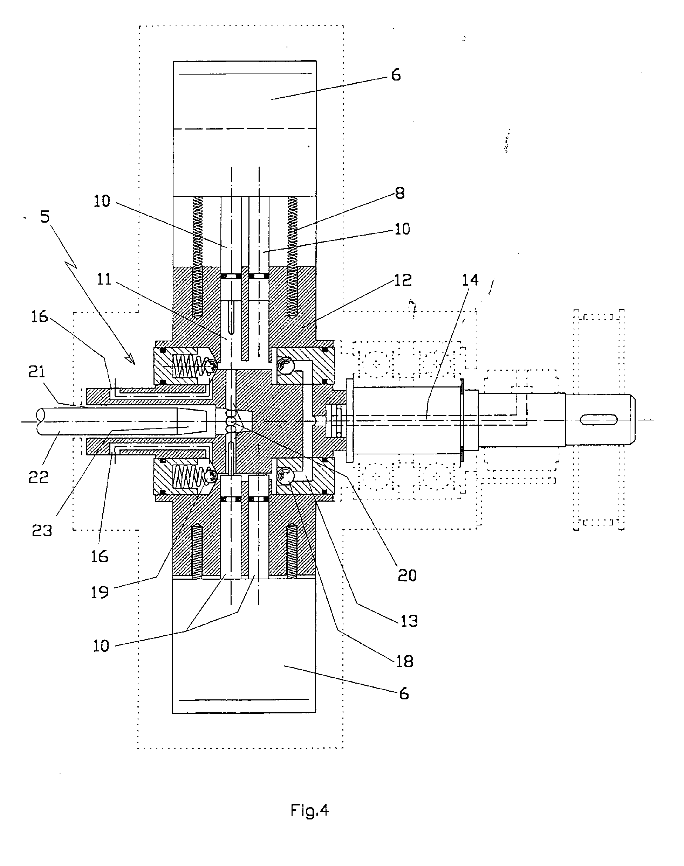

- fig. 4 (Table IV) represents an overall view of the rotor equipped with blades.

As can be seen in the figures, the reversible pneumatic group according to the finding, wholly indicated with reference numeral 1, comprises a stator 2, consisting of the body 3 and the cover 4, a rotor 5, mounted eccentrically with respect to the axis of the stator, equipped with projecting radial blades 6, which go into sliding contact on the inner wall 7 of the stator through centrifugal force, when the apparatus is in motion, or else through the thrusting action of elastic bodies (springs) 8, placed between the rotor and the blades themselves, during the starter step thereof.

Small radial pistons 10, floating in chambers 11, with variable volume, formed on the body 12 of the rotor 5, are connected to the blades 6, through a mobile coupling 9.

The chambers 11 communicate with the outside through suction ducts 13, all flowing on the attachment 14, formed on the rotating joint 15 and, through delivery ducts 16, all flowing on the attachment 17, formed on the flanged body of the stator.

Each of the two types of ducts is intercepted by a corresponding non-return valve, 18 and 19 respectively, which operate against each other on the two opposite ducts.

Moreover, the chambers 11 also communicate with the outside through radial top ducts 20, which flow in a single central duct 21 and are susceptible to being blocked through a pin 22, coaxial with the axis of the rotor and moved from the outside.

In the operative step, when the pneumatic group according to the finding acts as a "compressor", in the first stage, the air, sucked through the mouth "X", present on the body of the stator 2, is compressed through the chambers with variable volume "K" and discharged through the mouth "Y", present on the body itself, according to known methods of a bladed rotating compressor actuated by an external driving force (schematically indicated with the pulley "P") which makes the rotor 5 rotate.

The flow of compressed air "W" is then conveyed to the ducts 13, through the rotary joint 15, which feed the chambers 11, which constitute the chambers with variable volume of the second compression stage of the group, when it acts as a "compressor".

Still in the "compressor" state, the radial top ducts 20 are blocked by the end 23, preferably conical, of the pin 22.

When the reversible pneumatic group 1 according to the finding acts as a "motor", the compressed air coming from an external tank, where it has collected at around 50 bar and, after having passed through a pressure reducer, which reduces the pressure to 6/7 bar, enters through the mouth "Y" in the chambers with variable volume "K" where, thrusting on the blades 6, it makes the rotor 5 rotate, to then come out from the port "X".

In such a working condition the pin 22, commanded from the outside, simultaneously open the radial ducts 20, to allow the free movement of the air contained in the chambers 11 and thus allow the free movement of the small pistons 10 in the chambers themselves.

During the step of passage from compressor to motor and of inversion of the direction of rotation of the rotor, the blades 11 are kept adhering to the wall of the stator by the thrusting action of the springs 8, until the centrifugal force reaches a value such as to naturally ensure such an adherence.

## Claims

1. REVERSIBLE PNEUMATIC GROUP WITH TWO STAGES, to be used in any fixed or mobile application, where one wishes to accumulate and restore mechanical energy without the need for thermal motors or electrical motors/accumulators, in particular for the movement of light vehicles without a thermal or electric motor (bicycles, velocipedes, toys, special vehicles, etc...) and as a compressed air starter in vehicles with an internal combustion engine to replace the lead starter battery and the electric starter motor said reversible pneumatic group being **characterised in that**
it can act both as a compressor and as a compressed air motor, or rather a single apparatus that can act in two different ways: as a compressor, to transfer mechanical energy into compressed air and as a motor, to restore the energy of the compressed air into mechanical energy, all of this being able to be obtained by simply inverting the direction of rotation of the rotor.

2. REVERSIBLE PNEUMATIC GROUP, according to claim 1, **characterised in that**, when it works in compression state, it operates as a "two stage compressor", where the first stage uses a compression system with a bladed eccentric rotor, according to *per se* known ways, whereas the second stage uses a compression system with small concentric pistons which are connected to the blades and floating in corresponding compression/expansion chambers, formed on the body of the rotor.

3. REVERSIBLE PNEUMATIC GROUP, according to claim 2, **characterised in that** the small pistons are connected to the blades with mobile coupling.

4. REVERSIBLE PNEUMATIC GROUP, according to claim 2, **characterised in that** when the blades slide radially towards the centre of the rotor, realising a first compression stage, they thrust the small pistons connected to it towards the centre of the rotor, which decreases the volume of the individual chambers and thus a compressing force is realised which increases the pressure value of the compressed air in the chamber, or rather a second compression stage is also realised simultaneously.

5. REVERSIBLE PNEUMATIC GROUP, according to claim 4, **characterised in that** when the reversible pneumatic group acts as a motor, the blades slide radially in the opposite direction with respect to the direction of rotation as a compressor, regulated in stroke by their contact against the wall of the stator and kept in position by suitable elastic elements (springs), said blades, rotating, radially pull and thrust the small pistons in an integral manner, which, in this operating state as a motor, can slide freely given that the chamber is kept open by an air vent.

6. REVERSIBLE PNEUMATIC GROUP, according to one or more of the previous claims, **characterised in that** it can acts with a "closed circuit" as a compressor which produces a flow of compressed air and as a motor actuated by the flow of compressed air itself.

7. REVERSIBLE PNEUMATIC GROUP, according to one or more of the previous claims, of the type comprising a stator (2), consisting of the body (3) and the cover (4), a rotor (5), mounted eccentrically with respect to the axis of the stator, equipped with projecting radial blades (6), which go into sliding contact on the inner wall (7) of the stator, **characterised in that** small radial pistons (10), floating in chambers (11), with variable volume, formed on the body (12) of the rotor 5, are connected to the blades (6), said chambers (11) communicating with the outside through suction ducts (13), all flowing on the attachment (14), formed on the rotary joint (15) and through delivery ducts (16), all flowing on the attachment (17), formed on the flanged body of the stator.

8. REVERSIBLE PNEUMATIC GROUP, according to claim 7, **characterised in that** the small radial pistons (10) are connected to the blades (6) through a mobile coupling (9).

9. REVERSIBLE PNEUMATIC GROUP, according to claim 7, **characterised in that** each of the two types of ducts (13, 16) is intercepted by a non-return valve (18, 19), said pairs of valves operating against each other on the two opposite ducts.

10. REVERSIBLE PNEUMATIC GROUP, according to one or more of the previous claims, **characterised in that** the chambers (11) also communicate with the outside through radial top ducts (20), which flow in a single central duct (21) and are susceptible to being blocked through a pin (22), coaxial with the axis of the rotor and moved from the outside.

11. REVERSIBLE PNEUMATIC GROUP, according to one or more of the previous claims, **characterised in that**, when it acts as a "compressor", in the first stage, the air, sucked through the mouth (X), present on the body of the stator (2), is compressed through the chambers with variable volume (K) and discharged through the mouth (Y), present on the body itself; the flow of compressed air (W) is then conveyed to the ducts (13), through the rotary joint (15), said ducts feeding the chambers (11), which constitute the chambers with variable volume of the second compression stage of the group itself, during said operation the radial top ducts (20) of the aforementioned chambers are blocked by the conical end (23) of the pin (22).

12. REVERSIBLE PNEUMATIC GROUP, according to one or more of the previous claims, **characterised in that**, when it acts as a "motor", the compressed air coming from an external tank, where it has collected at around 50 bar and, after having passed through a pressure reducer, which reduces the pressure to 6/7 bar, enters through the mouth (Y) in the chambers with variable volume (K) where, thrusting on the blades (6), it makes the rotor (5) rotate, to then come out from the port (X); during said operation the pin (22), commanded from the outside, simultaneously opens the radial ducts (20) to allow the evacuation of the air contained in the chambers (11) and thus allow the free movement of the small pistons (10) in the chambers themselves.

13. REVERSIBLE PNEUMATIC GROUP, according to claim 12, **characterised in that**, during the step of passage from compressor to motor and thus of inversion of the direction of rotation of the rotor, the blades (11) are kept adhering to the wall of the stator by the thrusting action of the springs (8), until the centrifugal force reaches a value such as to naturally ensure such an adherence.

14. VEHICLE WITH THERMAL MOTOR, equipped with the reversible pneumatic group as a compressed air starter, according to one or more of the previous claims, **characterised in that** the compressed air tank is formed in the volume of the bumpers or in the tubular frame or in the roll-bar.

15. LIGHT VEHICLE WITH PEDALS, equipped with the reversible pneumatic group as a compressed air motor, according to one or more of the previous claims, **characterised in that** said group acts as a compressed air accumulator when one pedals downhill, whereas it becomes a compressed air motor when one pedals on the flat or uphill; in this case the compressed air tank is formed in the tubular frame.
